# EUROPEAN PATENT SPECIFICATION

(11) **EP 1 320 783 B1**
(45) Date of publication and mention of the grant of the patent: **02.07.2008**
(21) Application number: 01958670.0
(22) Date of filing: 21.08.2001
(51) Int. Cl.: G03B 42/04

(54) **METHOD OF RADIOGRAPHIC EXAMINATION**
VERFAHREN ZUR RADIOLOGISCHEN UNTERSUCHUNG
METHODE DE EXAMEN RADIOGRAPHIQUE

(30) Priority: 29.08.2000 NO 20004297
(43) Date of publication of application: 25.06.2003
(73) Proprietor: Softonus, 4339 Ålgård (NO)
(72) Inventor: Softonus, 4339 Ålgård (NO)
(74) Representative: Wagner, Karl Heinz
(86) International application number: PCT/NO2001/000345
(87) International publication number: WO 2002/019031

(56) References cited:
- US-A- 3 392 081
- US-A- 4 614 000
- US-A- 4 961 502
- US-A- 5 185 776
- US-A- 5 377 254
- US-A- 5 462 519

## Description

This invention concerns a method of radiographic examination of a patient where a radiographic film/image plate embedded in a raster screen cartridge is inserted into a disposable cartridge bag , and where a surface side of the cartridge bag having a, plurality of air/gas pockets/cushions formed by a bubble plastic, is arranged between the raster screen cartridge and the patient.

During radiography the X-ray apparatus is placed on the one side of the object. A radiographic film is placed on the side when employing older techniques, or an image when employing newer techniques. The film/image plate is encased by a raster screen/cartridge ordinarily made of metal.

Sick and/or injured persons often must be examined while lying in bed or on a stretcher. The raster screen/cartridge is inserted underneath the patient as close to the body as possible. This implies that bare skin can come into contact with the raster screen/cartridge, thus providing a cold and hard sensation during the period of examination. Upon taking many pictures the raster screen may have to be changed several times. This continuous contact with cold and hard metal may be perceived as an additional strain to a weak person.

Due to reasons of sanitation, the raster screen/cartridge must be cleaned/disinfected in between each patient. This implies a considerable additional workload in a busy radiography department.

Several solutions have been tried, and to some extent have been employed, in order to reduce the above-mentioned disadvantages. The oldest method consists in pulling a pillow case over the raster screen/cartridge. The patient's sensation of coldness upon contact with the plate is thus reduced, but the solution is relatively unhygienic in that bacteria can penetrate the pillow case material. Subsequently, the pillowcases must be laundered. Another method consists in encasing the raster screen/cartridge in a thin plastic film. The method is fast and hygienic but does not relieve the patient's discomfort when lying on a cold and edged object.

US patent 5185776 teaches the use of a foam pad between the x-ray casette and the patient.

US patent 5377254 discloses a casing for x-ray cassettes fabricated of a padded material.

The objective of the invention is to remedy the negative sides of prior art.

In accordance with the invention, the objective is achieved by the features disclosed in the below-mentioned description and in the subsequent patent claims.

A radiographic film/image.plate/raster/cartridge is inserted into a cartridge bag where after a surface side of the cartridge bag having a plurality of air/gas pockets/cushions, is arranged between the radiographic film/image plate/raster/cartridge and the patient

The bag is closed alongside three of its edges, while it is open and provided with a protruding flap alongside the fourth edge.

The flap is provided with an adhesive and is arranged to be folded over the edge in order to close the opening. Bacteria or possibly blood and other contaminated materials do not penetrate the plastic material. The bubble plastic provides a thermal insulation effect, and the air bubbles within the plastic subdue and distribute the pressure of the patient towards the raster screen/cartridge. The patient therefore sense a high degree of comfort by using a bag according to the invention.

The bag is of the disposable type, thereby eluding cleaning expenses.

In the following, a non-limiting example of a preferred embodiment of the invention is described, which embodiment is illustrated by the accompanying drawings, wherein:
Fig.1 displays the bag as the raster screen/cartridge is pushed into the bag;
Fig. 2 displays the bag in a closed condition; and

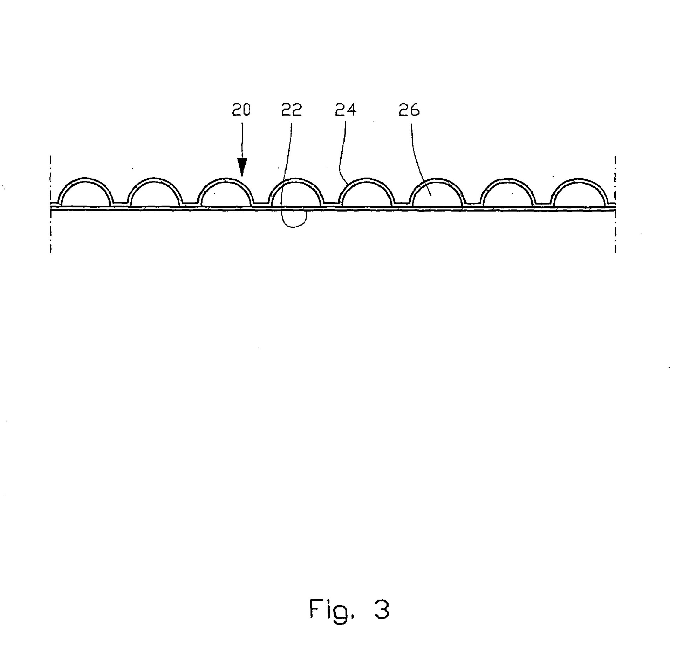

Fig. 3 displays in section a bubble plastic.

In the drawings, the reference numeral 2 denotes a bag according to the invention. The bag 2 is closed alongside edges 4, 5 and 6, while it is provided with an opening 9 alongside an edge 7. A flap 8 protrudes from the bag 2 alongside the edge 7. The flap 8 is provided:with an adhesive 10 on the side facing the bag 2 when the flap 8 covers the opening 9. Alternatively, a tear-off protective ribbon 12 is arranged over the adhesive 10 and is arranged to cover the adhesive 10 until closure of the bag 2.

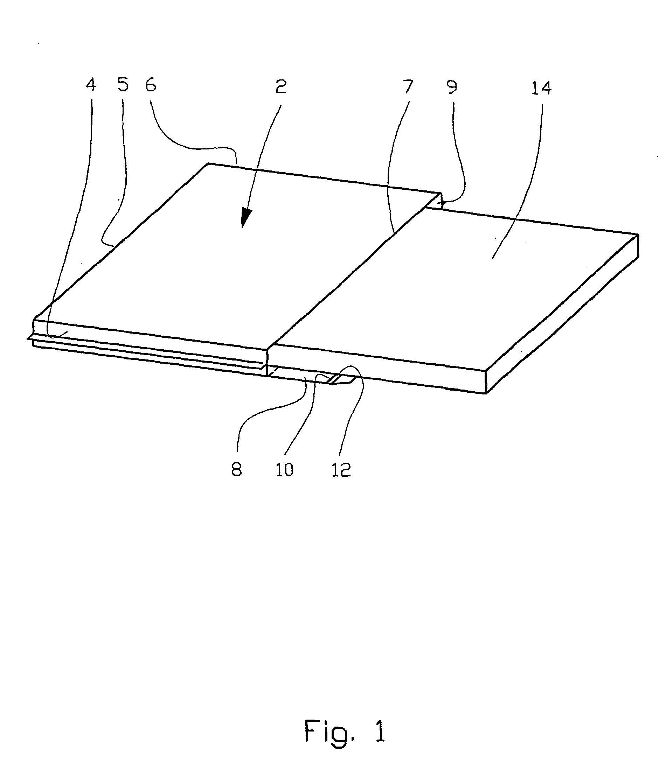

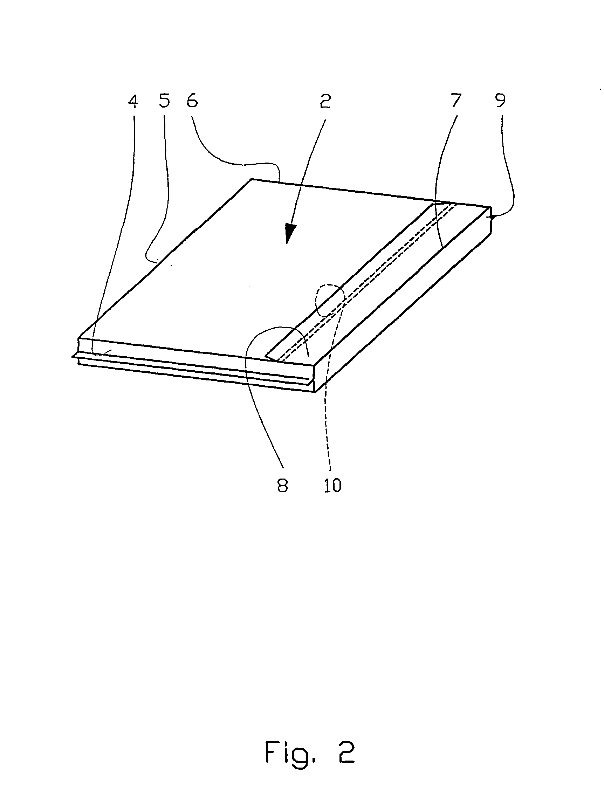

Upon applying the bag 2, a raster screen/cartridge 14 is inserted into the bag 2 through the opening 9, see fig. 1. When the cartridge 14 is fully inserted, a potential protective ribbon 12 is removed prior to the flap 8 being folded over the opening 9. The adhesive 10 adheres to one side of the bag 2, see fig. 2.

Subsequent to completing the exposure, the flap 8 is opened, and the raster screen/cartridge 14 is pulled out, and the bag 2 is discarded.

Usually, a bubble plastic 20 is provided with one planar plastic film side 22 and one corrugated plastic film side 24. Air pockets 26 between the plastic films 22, 24 form a plurality of soft, thermally insulated "cushions" in the surface of the plastic.

The plastic films 22, 24 may be provided with a smooth or less smooth surface in order to facilitate the insertion of the raster screen/cartridge 14 underneath the patient.

By utilising a bag 2 according to the invention, a considerably improved hygienic condition is achieved during radiographic examinations, concurrently providing better comfort for the patient (not shown) as a result of being thermally insulated and mechanically isolated from the raster screen/cartridge 14.

## Claims

1. A method of radiographic examination of a patient where a radiographic film/image plate embedded in a raster screen cartridge (14) is inserted into a disposable cartridge bag (2), **characterised in that** a surface side of the cartridge bag (2) having a plurality of air/gas pockets/cushions (26) formed by a bubble plastic is arranged between the raster screen cartridge (14) and the patient.

2. A method according to claim 1, **characterised in that** one open side (7) of the cartridge bag (2) is shut by closing a flap (8).

## Patentansprüche

1. Verfahren zur radiografischen Untersuchung eines Patienten, bei welchem eine radiografische Film-/Bildplatte, eingebettet in einer Rasterbildvorrichtung/Kassette (14), in eine Einwegkassettentasche (2) eingesetzt wird, **dadurch gekennzeichnet, dass** eine Oberflächenseite der Kassettentasche (2) mit mehreren Luft/Gastaschen bzw. Luft/Gaspolsterkissen (26), die durch einen Blasenkunststoff gebildet sind, zwischen der Rasterbildvorrichtung/Kassette (14) und dem Patienten angeordnet ist.

2. Verfahren nach Anspruch 1, **dadurch gekennzeichnet, dass** eine Öffnungsseite (7) der Kassettentasche (2) durch das Schließen einer Klappe (8) geschlossen wird.

## Revendications

1. Méthode d'examen radiographique de patients dans lequel une plaque de film/image radiographique noyée dans un écran tramé (14) est insérée dans un sac à cartouche jetable (2), **caractérisé en ce qu'**un côté de la surface du sac à cartouche (2) qui présente une pluralité de poches/coussins (26) air/gaz est placé dans un plastique à bulles placé entre l'écran tramé (14) et le patient.

2. Méthode selon la revendication 1, **caractérisé en ce que** le côté ouvert (7) du sac de cartouche (2) est obturé en fermant un rabat (8).
